Europäisches Patentamt

European Patent Office

Office européen des brevets

(19)

(11) **EP 1 274 579 B1**

(12) **EUROPÄISCHE PATENTSCHRIFT**

(45) Veröffentlichungstag und Bekanntmachung des Hinweises auf die Patenterteilung:
**24.03.2004  Patentblatt 2004/13**

(21) Anmeldenummer: 01909596.7

(22) Anmeldetag: **10.01.2001**

(51) Int Cl.[7]: **B32B 27/36**

(86) Internationale Anmeldenummer:
**PCT/EP2001/000214**

(87) Internationale Veröffentlichungsnummer:
**WO 2001/060613 (23.08.2001 Gazette 2001/34)**

(54) **EINSEITIG MATTE, SIEGELFÄHIGE, UV STABILISIERTE, KOEXTRUDIERTE, BIAXIAL ORIENTIERTE FOLIE, VERFAHREN ZU IHRER HERSTELLUNG UND VERWENDUNG**

UNILATERALLY MAT, SEALABLE, UV-STABILIZED, FLAME-RESISTANT, CO-EXTRUDED, BIAXIALLY ORIENTED POLYESTER FILM, METHOD FOR THE PRODUCTION AND THE USE THEREOF

FEUILLE COEXTRUDEE, SCELLABLE, STABILISEE AUX UV, MATE SUR UNE FACE ET A ORIENTATION BIAXIALE, SON PROCEDE DE FABRICATION ET SON UTILISATION

(84) Benannte Vertragsstaaten:
**DE FR GB IT LU NL**

(30) Priorität: **19.02.2000  DE 10007722**

(43) Veröffentlichungstag der Anmeldung:
**15.01.2003  Patentblatt 2003/03**

(73) Patentinhaber: **Mitsubishi Polyester Film GmbH 65203 Wiesbaden (DE)**

(72) Erfinder:
 • **MURSCHALL, Ursula 55283 Nierstein (DE)**
 • **KERN, Ulrich 55218 Ingelheim (DE)**
 • **CRASS, Günther 65232 Taunusstein (DE)**
 • **PEIFFER, Herbert 55126 Mainz (DE)**
 • **MAHL, Hans 65369 Walluf (DE)**

(74) Vertreter: **Schweitzer, Klaus, Dr. et al Patentanwaltskanzlei Zounek, Industriepark Kalle-Albert, Gebäude H391 Rheingaustrasse 190-196 65174 Wiesbaden (DE)**

(56) Entgegenhaltungen:
**EP-A- 0 035 835           EP-A- 0 712 719
EP-A- 0 903 222           EP-A- 0 947 982
GB-A- 2 344 596**

**Beschreibung**

Die Erfindung betrifft eine einseitig matte, siegelfähige, UV stabilisierte, koextrudierte, biaxial orientierte Polyesterfolie bestehend aus mindestens einer Basisschicht B und beidseitig auf dieser Basisschicht aufgebrachten siegelfähigen Deckschicht A und matten Deckschicht C. Die Folie enthält zusätzlich mindestens einen UV-Stabilisator als Lichtschutzmittel. Die Erfindung beinhaltet weiterhin ein Verfahren für die Herstellung der Folie und ihre Verwendung.

In der **GB-A 1 465 973** wird eine koextrudierte, zweischichtige Polyesterfolie beschrieben, deren eine Schicht aus isophthalsäurehaltigen und terephthalsäurehaltigen Copolyestern und deren andere Schicht aus Polyethylenterephthalat besteht. Über das Siegelverhalten der Folie finden sich in der Schrift keine verwertbaren Angaben. Wegen fehlender Pigmentierung ist die Folie nicht prozesssicher herstellbar (Folie ist nicht wickelbar) und nur unter Einschränkung weiterverarbeitbar.

In der **EP-A- 0 035 835** wird eine koextrudierte siegelfähige Polyesterfolie beschrieben, der zur Verbesserung des Wickel- und des Verarbeitungsverhaltens in der Siegelschicht Partikel beigesetzt werden, deren mittlere Teilchengröße die Schichtdicke der Siegelschicht übersteigt. Durch die teilchenförmigen Zusatzstoffe werden Oberflächenvorsprünge gebildet, die das unerwünschte Blocken und Kleben an Walzen oder Führungen verhindern. Über die andere, nicht siegelfähige Schicht der Folie werden keine näheren Angaben zur Einarbeitung von Antiblockmitteln gemacht. Es bleibt offen, ob diese Schicht Antiblockmittel enthält. Durch Wahl von Partikeln mit größerem Durchmesser als die Siegelschicht und den in den Beispielen angegebenen Konzentrationen wird das Siegelverhalten der Folie verschlechtert. Angaben zum Siegeltemperaturbereich der Folie werden in der Schrift nicht gemacht. Die Siegeinahtfestigkeit wird bei 140 °C gemessen und liegt in einem Bereich von 63 bis 120 N/m (0,97 N/15 mm bis 1,8 N/15 mm Folienbreite).

In der **EP-A-0 432 886** wird eine koextrudierte mehrschichtige Polyesterfolie beschrieben, die eine Oberfläche besitzt, auf der eine siegelfähige Schicht angeordnet ist und eine zweite Oberfläche besitzt, auf der eine Acrylatschicht angeordnet ist. Die siegelfähige Deckschicht kann auch hier aus isophthalsäurehaltigen und terephthalsäurehaltigen Copolyestern bestehen. Durch die rückseitige Beschichtung erhält die Folie ein verbessertes Verarbeitungsverhalten. Angaben zum Siegelbereich der Folie werden in der Schrift nicht gemacht. Die Siegelnahtfestigkeit wird bei 140 °C gemessen. Für eine 11 µm dicke Siegelschicht wird eine Siegelnahtfestigkeit von 761,5 N/m (11,4 N/15 mm) angegeben. Nachteilig an der rückseitigen Acrylatbeschichtung ist, daß diese Seite gegen die siegelfähige Deckschicht nicht mehr siegelt. Die Folie ist damit nur sehr eingeschränkt zu verwenden.

In der **EP-A- 0 515 096** wird eine koextrudierte, mehrschichtige siegelfähige Polyesterfolie beschrieben, die auf der siegelfähigen Schicht ein zusätzliches Additiv enthält. Das Additiv kann z.B. anorganische Partikel enthalten und wird vorzugsweise in einer wässrigen Schicht an die Folie bei deren Herstellung angetragen. Hierdurch soll die Folie die guten Siegeleigenschaften beibehalten und gut zu verarbeiten sein. Die Rückseite enthält nur sehr wenige Partikel, die hauptsächlich über das Regranulat in diese Schicht gelangen. Angaben zum Siegeltemperaturbereich der Folie werden auch in dieser Schrift nicht gemacht. Die Siegelnahtfestigkeit wird bei 140 °C gemessen und beträgt mehr als 200 N/m (3 N/15 mm). Für eine 3 µm dicke Siegelschicht wird eine Siegelnahtfestigkeit von 275 N/m (4,125 N/15 mm) angegeben.

In der **WO 98/06575** wird eine koextrudierte mehrschichtige Polyesterfolie beschrieben, die eine siegelfähige Deckschicht und eine nicht siegelfähige Basisschicht enthält. Die Basisschicht kann dabei aus einer oder mehreren Schichten aufgebaut sein, wobei die innere der Schicht mit der siegelfähigen Schicht in Kontakt ist. Die andere (äußere) Schicht bildet dann die zweite nicht siegelfähige Deckschicht. Die siegelfähige Deckschicht kann auch hier aus isophthalsäurehaltigen und terephthalsäurehaltigen Copolyestern bestehen, die jedoch keine Antiblockteilchen enthalten. Die Folie enthält außerdem noch mindestens einen UV-Absorber, der der Basisschicht in einem Gewichtsverhältnis von 0,1 bis 10,0 Gew.-% zugegeben wird. Die Basisschicht ist mit üblichen Antiblockmitteln ausgestattet. Die Folie zeichnet sich durch eine gute Siegelfähigkeit aus, hat jedoch nicht das gewünschte Verarbeitungsverhalten und weist zudem Defizite in den optischen Eigenschaften auf. Die Folie kann zudem eine matte Oberfläche aufweisen, sie besitzt dann aber eine hohe Trübung, die unerwünscht ist.

Bei Außenanwendungen zeigen Folien, die keine UV absorbierende Materialien enthalten, bereits nach kurzer Zeit eine Vergilbung und eine Verschlechterung der mechanischen Eigenschaften infolge eines photooxidativen Abbaus durch das Sonnenlicht.

Zu den guten mechanischen Eigenschaften zählt unter anderem eine hoher E-Modul ($E_{MD}$ > 3200 N/mm$^2$; $E_{TD}$ > 3500 N/mm$^2$) sowie gute Reißfestigkeitswerte (in MD > 100 N/mm$^2$; in TD > 130 N/mm$^2$).

Aufgabe der vorliegenden Erfindung war es, die Nachteile des Standes der Technik zu vermeiden.

Gegenstand der Erfindung ist eine einseitig matte, UV stabilisierte, siegelfähige, koextrudierte, biaxial orientierte Polyesterfolie mit mindestens einer Basisschicht B, einer siegelfähigen Deckschicht A und einer weiteren matten Deckschicht C , wobei in mindestens einer Schicht ein UV-Absorber enthalten ist und wobei die siegelfähige Deckschicht A eine Siegelanspringtemperatur von 110 °C und eine Siegelnahtfestigkeit von mindestens 1,3 N/15 mm aufweist und die Topographien der beiden Deckschichten A und C durch die folgenden Merkmale gekennzeichnet sind:

Siegelfähige Deckschicht A:

- $R_a$-Wert < 30 nm
- Messwert der Gasströmung 500 - 4000 s

Nicht siegelfähige, matte Deckschicht C:

- 200 nm < $R_a$ < 1000 nm
- Messwert der Gasströmung < 50 s.

Die Erfindung betrifft ferner ein Verfahren zur Herstellung der Folie und ihre Verwendung.

Es wird somit eine einseitig matte, transparente, UV-stabilisierte, siegelfähige und biaxial orientierte Polyesterfolie bereitgestellt, die sich insbesondere durch eine sehr gute Siegelfähigkeit, eine wirtschaftliche Herstellung, eine verbesserte Verarbeitbarkeit und verbesserte optische Eigenschaften auszeichnet.

Die Erfindung gestattet es, den Siegelbereich der Folie auf niedrige Temperaturen zu erweitern, die Siegelnahtfestigkeit der Folie zu erhöhen und gleichzeitig für ein verbessertes Handling der Folie zu sorgen als es nach dem Stand der Technik bekannt ist. Außerdem ist gewährleistet, daß die Folie auch auf schnellaufenden Verarbeitungsmaschinen verarbeitet werden kann. Bei der Herstellung der Folie kann immanent anfallendes Regenerat in einer Konzentration bis zu 60 Gew.-%, bezogen auf das Gesamtgewicht der Folie, der Extrusion zugeführt werden, ohne daß dabei die physikalischen Eigenschaften der Folie nennenswert negativ beeinflußt werden.

Da die Folie gemäß der Erfindung insbesondere für die Außenanwendung und/oder kritische Innenanwendungen gedacht ist, soll sie eine hohe UV-Stabilität aufweisen. Eine hohe UV-Stabilität bedeutet, daß die Folien durch Sonnenlicht oder andere UV-Strahlung nicht oder nur extrem wenig geschädigt werden. Insbesondere sollen die Folien bei mehrjähriger Außenanwendung nicht vergilben, keine Versprödung oder Rißbildung der Oberfläche zeigen und auch keine Verschlechterung der mechanischen Eigenschaften aufweisen. Hohe UV-Stabilität bedeutet demnach, daß die Folie das UV-Licht absorbiert und Licht erst im sichtbaren Bereich durchläßt.

Der(Die) UV-Stabilisator(en) wird(werden) zweckmäßigerweise als Masterbatch(e) bei der Folienherstellung direkt zudosiert, wobei die Konzentration des(der) UV-Stabilisators(en) vorzugsweise im Bereich von 0,01 Gew.-% bis 5,0 Gew.-%, vorzugsweise 0,1 Gew.-% bis 3,0 Gew.-%, bezogen auf das Gewicht der jeweiligen Schicht des verwendeten Polyesters, liegt(liegen).

Die Folie gemäß der Erfindung ist im allgemeinen zumindest dreischichtig und umfaßt dann als Schichten die Basisschicht B, die siegelfähige Deckschicht A und die matte Deckschicht C.

Die Basisschicht B der Folie besteht im allgemeinen zu mindestens 90 Gew.-% aus einem thermoplastischen Polyester. Geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethylcyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'dicarbonsäure (= Polyethylen-2,6-naphthalatbibenzoat, PENBB). Bevorzugt sind Polyester, die zu mindestens 90 Mol-%, bevorzugt mindestens 95 Mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren, wie sie auch in der Schicht A (oder der Schicht C) vorkommen können.

Geeignete andere aliphatische Diole sind beispielsweise Diethylenglykol, Triethylenglykol, aliphatische Giykoie der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -$C(CH_3)_2$-, -$C(CF_3)_2$-, -O-, -S- oder -$SO_2$- steht. Daneben sind auch Bisphenole der Formel HO-$C_6H_4$-$C_6H_4$-OH gut geeignet.

Andere aromatische Dicarbonsäuren sind bevorzugt Benzoldicarbonsäuren, Naphtalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Die Herstellung der Polyester kann z.B. nach dem Umesterungsverfahren erfolgen, Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Die durch Koextrusion auf die Basisschicht B aufgebrachte siegelfähige Deckschicht A ist auf Basis von Polyestercopolymeren aufgebaut und besteht im wesentlichen aus amorphen Copolyestern, die überwiegend aus Isophthalsäure- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren, wie sie auch in der Basisschicht vorkommen können. Die bevorzugten Copolyester, die die gewünschten Siegeleigenschaften bereitstellen, sind solche, die aus Ethylenterephthalat- und Ethylenisophthalat-Einheiten und aus Ethylenglykol-Einheiten aufgebaut sind. Der Anteil an Ethylenterephthalat beträgt 40 bis 95 Mol-% und der entsprechende Anteil an Ethylenisophthalat 60 bis 5 Mol-%. Bevorzugt sind Copolyester, bei denen der Anteil an Ethylenterephthalat 50 bis 90 Mol-% und der entsprechende Anteil an Ethylenisophthalat 50 bis 10 Mol-% beträgt und ganz bevorzugt sind Copolyester, bei denen der Anteil an Ethylenterephthalat 60 bis 85 Mol-% und der entsprechende Anteil an Ethylenisophthalat 40 bis 15 Mol-% beträgt.

Die matte Deckschicht C enthält in ihrer bevorzugten Ausführungsform ein Blend oder eine Mischung aus zwei Komponenten I und II und gegebenenfalls zugesetzte Additive in Form von inerten anorganischen Antiblockmitteln.

Die Komponente I der Mischung bzw. des Blends ist ein Polyethylenterephthalat-Homopolymer oder Polyethylenterephthalat Copolymer oder eine Mischung aus Polyethylenterephthalat Homo- oder Copolymeren.

Die Komponente II des Copolymers oder der Mischung bzw. des Blends ist ein Polyethylenterephthalat-Copolymer, welches aus dem Kondensationsprodukt der folgenden Monomeren bzw. deren zur Bildung von Polyestern befähigten Derivaten besteht:

A) 65 bis 95 Mol-% Isophthalsäure;
B) 0 bis 30 Mol-% wenigstens einer aliphatische Dicarbonsäure mit der Formel $HOOC(CH_2)_nCOOH$, wobei n im Bereich von 1 bis 11 liegt;
C) 5 bis 15 Mol-% wenigstens eines Sulfomonomeren enthaltend eine Alkalimetallsulfonatgruppe an dem aromatischen Teil einer Dicarbonsäure;
D) die zur Bildung von 100 Mol-% Kondensat notwendige stöchiometrische Menge eines copolymerisierbaren aliphatischen oder cycloaliphatischen Glykols mit 2 bis 11 Kohlenstoffatomen;

wobei die Prozentangaben jeweils bezogen sind auf die Gesamtmenge der die Komponente II bildenden Monomeren. Zur ausführlichen Beschreibung der Komponente II siehe auch die **EP-A-0 144 878**, auf die hier ausdrücklich Bezug genommen wird.

Unter Mischungen im Sinne der vorliegenden Erfindung sind mechanische Mischungen zu verstehen, welche aus den Einzelkomponenten hergestellt werden. Im allgemeinen werden hierzu die einzelnen Bestandteile als gepreßte Formkörper kleiner Größe, z.B. linsen-oder kugelförmiges Granulat, zusammengeschüttet und mit einer geeigneten Rüttelvorrichtung mechanisch miteinander gemischt. Eine andere Möglichkeit für die Erstellung der Mischung besteht darin, daß die jeweiligen Komponenten I und II in Granulatform jeweils für sich getrennt dem Extruder für die erfindungsgemäße Deckschicht zugeführt werden und die Mischung im Extruder, bzw. in den nachfolgenden schmelzeführenden Systemen durchgeführt wird.

Ein Blend im Sinne der vorliegenden Erfindung ist ein legierungsartiger Verbund der einzelnen Komponenten I und II, welcher nicht mehr in die ursprünglichen Bestandteilen zerlegt werden kann. Ein Blend weist Eigenschaften wie ein homogener Stoff auf und kann entsprechend durch geeignete Parameter charakterisiert werden.

Das Verhältnis (Gewichtsverhältnis) der beiden Komponenten I und II der Deckschichtmischung bzw. des Blends kann innerhalb weiter Grenzen variieren und richtet sich nach dem beabsichtigten Einsatzzweck der Mehrschichtfolie. Bevorzugt liegt das Verhältnis der Komponenten I und II in einem Bereich von I:II =10:90 bis I:II = 95:5, vorzugsweise von I:II = 20:80 bis I:II = 95:5 und insbesondere von I:II =30:70 bis I:II =95:5.

Die gewünschten Siegeleigenschaften, den gewünschten Mattheitsgrad und die gewünschten Verarbeitungseigenschaften der Folie gemäß der Erfindung werden aus der Kombination der Eigenschaften des verwendeten Copolyesters für die siegelfähige Deckschicht und den Topographien der siegelfähigen Deckschicht A und der nicht siegelfähigen, matten Deckschicht C erhalten.

Die Siegelanspringtemperatur von 110 °C und der Siegelnahtfestigkeit von mindestens 1,3 N/15mm wird erreicht, wenn für die siegelfähige Deckschicht A die oben näher beschriebenen Copolymeren verwendet werden. Die besten Siegeleigenschaften der Folie erhält man, wenn dem Copolymeren keine weiteren Additive, insbesondere keine anorganische oder organische Filler zugegeben werden. Für diesen Fall erhält man bei vorgegebenem Copolyester die niedrigste Siegelanspringtemperatur und die höchsten Siegelnahtfestigkeiten. Allerdings ist in diesem Fall das Handling der Folie schlecht, da die Oberfläche der siegelfähigen Deckschicht A stark zum Verblocken neigt. Die Folie läßt sich kaum wickeln und ist für eine Weiterverarbeitung auf schnellaufenden Verpackungsmaschinen nicht geeignet.

Zur Verbesserung des Handlings der Folie und der Verarbeitbarkeit ist es notwendig, die siegelfähige Deckschicht A zu modifizieren. Dies geschieht am besten mit Hilfe von geeigneten Antiblockmitteln einer ausgewählten Größe, die in einer bestimmten Konzentration der Siegelschicht zugegeben werden und zwar derart, daß einerseits das Verblokken minimiert und andererseits die Siegeleigenschaften nur unwesentlich verschlechtert werden. Diese gewünschte Eigenschaftskombination läßt sich erreichen, wenn die Topographie der siegelfähigen Deckschicht A durch den folgenden Satz von Parametern gekennzeichnet ist:

- Die Rauhigkeit der siegelfähigen Deckschicht, gekennzeichnet durch den $R_a$-Wert, ist im allgemeinen kleiner als 30 nm, vorzugsweise kleiner als 25 nm. Im anderen Fall werden die Siegeleigenschaften im Sinne der vorliegenden Erfindung negativ beeinflusst.
- Der Messwert der Gasströmung soll im Bereich von 500-4000 s, vorzugsweise von 600 - 3500 s liegen. Bei Werten unterhalb von 500 s werden die Siegeleigenschaften im Sinne der vorliegenden Erfindung negativ beeinflusst und bei Werten oberhalb von 4000 s wird das Handling der Folie schlecht.

Die nicht siegelfähige, matte Deckschicht C wird durch den folgenden Satz von Parametern gekennzeichnet

- Die Rauhigkeit der matten Deckschicht, gekennzeichnet durch den $R_a$-Wert, liegt im Bereich von 200 - 1000 nm, vorzugsweise 220 - 900 nm. Kleinere Werte als 200 nm haben negative Auswirkungen auf das Wickel- und Verarbeitungsverhalten der Folie, sowie auf den Mattheitsgrad der Oberfläche. größerer Werte als 1000 nm beeinträchtigen die optischen Eigenschaften (Trübung) der Folie.
- Der Messwert der Gasströmung sollte im Bereich ≤ 50 s, vorzugsweise ≤ 45 s liegen. Bei Werten oberhalb von 50 wird der Mattigkeitsgrad der Folie negativ beeinflusst.

Im Prinzip können sämtliche organische und anorganische UV Stabilisatoren, die für die Einarbeitung in Polyestem geeignet sind, ausgewählt werden. Solche geeignete UV-Stabilisatoren sind nach dem Stand der Technik bekannt und z.B. in **WO 98/06575**, in **EP-A-0 144 878**, in **EP-A-0 031 202, EP-A-0 031 203** oder in der **EP-A-0 076 582** näher beschrieben.

UV-Stabilisatoren, d.h. UV-Absorber als Lichtschutzmittel, sind im allgemeinen chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für transparente Folien ungeeignet, da sie zur Verfärbung oder Farbänderung führen. Für transparente Folien sind nur organische und metallorganische Verbindungen geeignet, die dem zu stabilisierenden Thermoplasten keine oder nur eine extrem geringe Farbe oder Farbänderung verleihen.

Geeignete UV-Stabilisatoren sind solche, die mindestens 70 %, vorzugsweise 80 %, besonders bevorzugt 90 %, des UV-Lichts im Wellenlängenbereich von 180 nm bis 380 nm, vorzugsweise 280 bis 360 nm absorbieren. Diese sind insbesondere geeignet, wenn sie im Temperaturbereich von 260 bis 300 °C thermisch stabil sind, d.h. sich nicht zersetzen und nicht zur Ausgasung führen. Geeignet sind beispielsweise 2-Hydroxybenzophenone, 2-Hydroxybenzotriazole, nickelorganische, Verbindungen, Salicylsäureester, Zimtsäureester-Derivate, Resorcinmonobenzoate, Oxalsäureanilide, Hydroxybenzoesäureester, sterisch gehinderte Amine und/oder. Triazine, wobei die 2-Hydroxybenzotriazole und die Triazine bevorzugt sind.

In einer bevorzugten Ausführungsform enthält die Folie gemäß der Erfindung als UV absorbierende Substanz 0,01 Gew.-% bis 5,0 Gew.-% 2-(4,6-Diphenyl-1,3,5-triazin-2-yl)-5-(hexyl)oxy-phenol oder 0,01 Gew.-% bis 5,0 Gew.-% 2,2'-Methylen-bis(6-(2Hbenzotriazol-2-yl)-4-(1,1,2,2-tetramethylpropyl)-phenol. Es können auch Mischungen dieser beiden UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel vorzugsweise im Bereich von 0,01 Gew.-% bis 5,0 Gew.-%, bezogen auf das Gewicht des thermoplastischen Polyesters, liegt.

In der dreischichtigen Ausführungsform ist der UV-Stabilisator vorzugsweise in der nicht siegelfähigen Deckschicht C enthalten. Jedoch kann nach Bedarf auch die Basisschicht B oder auch die siegelfähige Deckschicht A mit UV-Stabilisatoren ausgerüstet sein. Die Konzentration des oder der Stabilisatoren bezieht sich dabei auf das Gewicht der Thermoplasten in der mit UV-Stabilisator (en) ausgerüsteten Schicht.

Überraschender Weise haben Bewitterungsversuche nach der Testspezifikation ISO 4892 mit dem Atlas CI65 Weather Ometer gezeigt, daß es im Falle der vorgenannten dreischichtigen Folie durchaus ausreichend ist, die 0,3 μm bis 2,5 μm dicken Deckschichten mit UV-Stabilisatoren auszurüsten, um eine verbesserte UV-Stabilität zu erreichen.

Bewitterungstests haben ergeben, daß die erfindungsgemäß UV-stabilisierten Folien selbst bei Bewitterungstests nach hochgerechnet 5 bis 7 Jahren Außenanwendung im allgemeinen keine Vergilbung, keine Versprödung, kein Glanzverlust der Oberfläche, keine Rißbildung an der Oberfläche und keine Verschlechterung der mechanischen Eigenschaften aufweisen.

Das Lichtschutzmittel kann bereits beim Thermoplast-Rohstoffhersteller zudosiert werden oder bei der Folienherstellung in den Extruder dosiert werden.

Bevorzugt ist die Zugabe des Lichtschutzmittels über die Masterbatch-Technologie. Hierbei wird der Zusatz zunächst in einem Trägermaterial voll dispergiert. Als Trägermaterial kommen der Thermoplast selbst, z.B. das Polyethylenterephthalat oder auch andere Polymere, die mit dem Thermoplasten verträglich sind, in Frage. Nach der Zudosierung zu dem Thermoplasten für die Folienherstellung schmelzen die Bestandteile des Masterbatches während der Extrusion und werden so in dem Thermoplasten gelöst.

Die Konzentration des UV-Absorbers neben dem Thermoplast im Masterbatch beträgt 2,0 bis 50,0 Gew.-%, vorzugsweise 5,0 bis 30,0 Gew.-%, wobei die Summe der Bestandteile stets 100 Gew.-% beträgt.

Wichtig bei der Masterbatch-Technologie ist, daß die Komgröße und das Schüttgewicht des Masterbatches ähnlich der Komgröße und dem Schüttgewicht des Thermoplasten ist, so daß eine homogene Verteilung und damit eine homogene UV-Stabilisierung erfolgen kann.

Damit ist eine solche Folie auch wirtschaftlich rentabel.

Desweiteren ist sehr überraschend, daß auch das aus den Folien beziehungsweise den Formkörpem erzeugte Regenerat wieder einsetzbar ist, ohne den Gelbwert der Folie negativ zu beeinflussen.

Die Basisschicht B kann zusätzlich übliche Additive, wie Stabilisatoren und/oder Antiblockmittel enthalten. Auch die beiden anderen Schichten A und C können diese Zusätze enthalten. Sie werden zweckmäßig dem Polymer beziehungsweise der Polymermischung bereits vor dem Aufschmelzen zugesetzt. Als Stabilisatoren werden beispielsweise Phosphorverbindungen, wie Phosphorsäure oder Phosphorsäureester, eingesetzt.

Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Arcrylat-Partikel.

Als Antiblockmittel können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den jeweils vorteilhaften Konzentrationen, z.B. als glykolische Dispersion während der Polykondensation oder über Masterbatche bei der Extrusion zugegeben werden.

Bevorzugte Partikel sind $SiO_2$ in kolloidaler und in kettenartiger Form. Diese Partikel werden sehr gut in die Polymermatrix eingebunden und erzeugen nur geringfügig Vakuolen. Vakuolen verursachen im allgemeinen Trübung und sind daher zweckmäßigerweise zu vermeiden. Die Partikeldurchmesser der eingesetzten Teilchen sind prinzipiell nicht eingeschränkt. Für die Lösung der Aufgabe hat es sich jedoch als zweckmäßig erwiesen, Teilchen mit einem mittleren Primärpartikeldurchmesser von kleiner als 100 nm, bevorzugt kleiner als 60 nm und besonders bevorzugt kleiner als 50 nm und/oder Teilchen mit einem mittleren Primärpartikeldurchmesser von größer als 1 µm, bevorzugt größer als 1,5 µm und besonders bevorzugt größer als 2 µm zu verwenden. Diese zuletzt beschriebenen Teilchen sollten jedoch keinen mittleren Partikeldurchmesser aufweisen, der größer ist als 5 µm.

Zur Erzielung der vorgenannten Eigenschaften der siegelfähigen Folie hat es sich als zweckmäßig erwiesen, die Partikelkonzentration in der Basisschicht B niedriger zu wählen als in den beiden Deckschichten A und C. Bei einer dreischichtigen Folie vom genannten Typ wird in der Basisschicht B die Partikelkonzentration im Bereich von 0 bis 0,15 Gew.-%, vorzugsweise von 0,001 bis 0,12 Gew.-% und insbesondere von 0,002 bis 0,10 Gew.-% liegen. Der Partikeldurchmesser der eingesetzten Teilchen ist prinzipiell nicht eingeschränkt, jedoch sind Teilchen mit einem mittleren Durchmesser von größer 1 mm besonders bevorzugt.

In der vorteilhaften Verwendungsform besteht die Folie gemäß der Erfindung aus drei Schichten, der Basisschicht B und beidseitig auf dieser Basisschicht aufgebrachten Deckschichten A und C, wobei die Deckschicht A gegen sich selbst und gegen die Deckschicht C siegelfähig ist.

Zur Erzielung des genannten Eigenschaftsprofils der Folie weist die Deckschicht C mehr Pigmente (d.h. höhere Pigmentkonzentration) als die Deckschicht A auf. Die Pigmentkonzentration in dieser zweiten, matten Deckschicht C liegt im Bereich von 1,0 bis 10,0 %, vorteilhaft von 1,5 bis 10 % und insbesondere von 2,0 bis 10 %. Die andere, der Deckschicht C gegenüberliegenden, siegelfähige Deckschicht A ist dagegen weniger mit inerten Pigmenten gefüllt. Die Konzentration der inerten Partikeln in der Schicht A liegt im Bereich von 0,01 bis 0,2 Gew.-%, vorzugsweise von 0,015 bis 0,15 Gew.-% und insbesondere von 0,02 bis 0,1 Gew.-%.

Zwischen der Basisschicht und den Deckschichten kann sich gegebenenfalls noch eine Zwischenschicht befinden. Diese kann wiederum aus den für die Basisschichten beschriebenen Polymeren bestehen. In einer besonders bevorzugten Ausführungsform besteht sie aus dem für die Basisschichtyerwendeten Polyester. Sie kann auch die beschriebenen üblichen Additive enthalten. Die Dicke der Zwischenschicht ist im allgemeinen größer als 0,3 µm und liegt vorzugsweise im Bereich von 0,5 bis 15 µm, insbesondere im Bereich von 1,0 bis 10 µm und ganz besonders bevorzugt im Bereich von 1,0 bis 5 µm.

Bei der besonders vorteilhaften dreischichtigen Ausführungsform der Folie gemäß der Erfindung ist die Dicke der Deckschichten A und C im allgemeinen größer als 0,1 μm und liegt allgemein im Bereich von 0,2 bis 4,0 μm, vorteilhaft im Bereich von 0,2 bis 3,5 μm, insbesondere im Bereich von 0,3 bis 3 μm und ganz besonders bevorzugt im Bereich von 0,3 bis 2,5 μm, wobei die Deckschichten A und C gleich oder verschieden dick sein können.

Die Gesamtdicke der Folie gemäß der Erfindung kann innerhalb bestimmter Grenzen variieren. Sie beträgt 3 bis 100 μm, insbesondere 4 bis 80 μm, vorzugsweise 5 bis 70 μm, wobei die Schicht B einen Anteil von vorzugsweise 5 bis 90 % an der Gesamtdicke hat.

Die Polymere für die Basisschicht B und die beiden Deckschichten A und C werden drei Extrudern zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiterer Walzen abgezogen und verfestigt.

Die Folie gemäß der Erfindung wird im allgemeinen nach dem an sich bekannten Koextrusionsverfahren hergestellt.

Im Rahmen dieses Verfahrens wird so vorgegangen, daß die den einzelnen Schichten der Folie entsprechenden Schmelzen durch eine Flachdüse koextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird, wie beim Koextrusionsverfahren üblich, das Polymere bzw. die Polymermischung der einzelnen Schichten in einem Extruder komprimiert und verflüssigt, wobei die gegebenenfalls zugesetzten Additive bereits im Polymer beziehungsweise in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d. h. senkrecht zur Maschinenrichtung, =TD-Richtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Vor der Querstreckung kann man eine oder beide Oberfläche(n) der Folie nach den bekannten Verfahren in-line beschichten. Die In-Line-Beschichtung kann beispielsweise zu einer verbesserten Haftung der Metallschicht oder einer eventuell aufgebrachten Druckfarbe, aber auch zur Verbesserung des antistatischen Verhaltens oder des Verarbeitungsverhaltens dienen.

Für die Herstellung einer Folie mit sehr guten Siegeleigenschaften hat es sich als günstig erwiesen, wenn die planare Orientierung $\Delta p$ der Folie kleiner ist als $\Delta p = 0,165$, besonders aber kleiner ist als $\Delta p = 0,163$. In diesem Fall ist die Festigkeit der Folie in Dickenrichtung so groß, daß bei der Messung der Siegelnahtfestigkeit definitiv die Siegelnaht aufgetrennt wird und die Folie nicht einreißt und weiterreißt.

Es hat sich herausgestellt, daß die wesentlichen Einflußgrößen auf die planare Orientierung $\Delta p$ die Verfahrensparameter in der Längsstreckung und in der Querstreckung sind, sowie der SV-Wert des verwendeten Rohstoffes. Zu den Verfahrensparametem gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$), die Folienbahngeschwindigkeit und die Art der Streckung, insbesondere diejenige in Längsrichtung der Maschine. Erhält man beispielsweise mit einer Maschine eine planare Orientierung von $\Delta p = 0,167$ mit dem Parametersatz $\lambda_{MD} = 4,8$ und $\lambda_{TD} = 4,0$, die Strecktemperaturen in Längs- und in Querrichtung $T_{MD} = 80 - 118 °C$ und $T_{TD} = 80 - 125 °C$, so erhält man durch Erhöhung der Längsstrecktemperatur auf $T_{MD} = 80 - 125 °C$ oder durch Erhöhung der Querstrecktemperatur auf $T_{TD} = 80 - 135 °C$ oder durch Absenkung des Längsstreckverhältnisses auf $\lambda_{MD} = 4,3$ oder durch Absenkung des Querstreckverhältnisses auf $\lambda_{TD} = 3,7$ eine planare Orientierung $\Delta p$, die im gewünschten Bereich liegt. Die Folienbahngeschwindigkeit betrug hierbei 340 m/min und der SV-Wert des Materials etwa 730. Die genannten Daten beziehen sich bei der Längsstreckung auf die sogenannte N-TEP Streckung, die sich zusammensetzt aus einem niedrig orientierenden Streckschritt (LOE = Low Orientation Elongation) und einem hoch orientierenden Streckschritt (REP = Rapid Elongation Process). Bei anderen Streckwerken ergeben sich prinzipiell die gleichen Verhältnisse, jedoch können die Zahlenwerte für die jeweiligen Verfahrensparameter leicht verschieden sein. Die angegeben Temperaturen beziehen sich bei der Längsstreckung auf die jeweiligen Walzentemperaturen und bei der Querstreckung auf die Folientemperaturen, die mittels IR gemessen wurden.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Bevorzugt wird/werden nach der biaxialen Streckung eine oder beide Oberfläche/n der Folie nach einer der bekannten Methoden corona- oder flammbehandelt. Die Behandlungsintensität liegt im allgemeinen im Bereich von über 45 mN/m.

Zur Einstellung weiterer gewünschter Eigenschaften kann die Folie zusätzlich beschichtet werden. Typische Beschichtungen sind haftvermittelnde, antistatisch, schlupfverbessernd oder dehäsiv wirkende Schichten. Es bietet sich an, diese zusätzlichen Schichten über inline coating mittels wässriger Dispersionen vor dem Streckschritt in Querrichtung auf die Folie aufzubringen.

Die Folie gemäß der Erfindung zeichnet sich durch eine hervorragende Siegelfähigkeit, eine sehr gute Stabilität gegenüber UV-Licht, ein sehr gutes Handling und durch ein sehr gutes Verarbeitungsverhalten aus. Bei der Folie siegelt die siegelfähige Deckschicht A nicht nur gegen sich selbst (fin sealing), sondern auch gegeri die nicht siegelfähige Deckschicht C (lap sealing). Bei der lap sealing ist die Siegelanspringtemperatur lediglich um ca. 10 K nach oben verschoben und die Siegelnahtfestigkeit ist um nicht mehr als 0,3 N/15 mm verschlechtert.

Außerdem konnte die Mattheit bei gleichzeitiger Reduzierung der Trübung der Folie gegenüber Folien nach dem Stand der Technik verbessert werden. Bei der Herstellung der Folie ist gewährleistet, daß das Regenerat in einer Konzentration von 20 bis 60 Gew.-%, bezogen auf das Gesamtgewicht der Folie, wieder der Extrusion zugeführt werden kann, ohne daß dabei die physikalischen Eigenschaften der Folie nennenswert negativ beeinflußt werden.

Die Folie eignet sich auf Grund ihrer hervorragenden Siegeleigenschaften, ihres sehr guten Handlings und ihrer sehr guten Verarbeitungseigenschaften insbesondere für die Verarbeitung auf schnelllaufenden Maschinen.

Darüber hinaus eignen sich die Folien gemäß der Erfindung und der daraus hergestellten Artikel auf Grund ihrer hervorragender Eigenschaftskombinationen für eine Vielzahl verschiedener Anwendungen, beispielsweise für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium.

Aufgrund der guten UV-Stabilität eignet sie sich weiterhin für Außenanwendungen z.B. für Gewächshäuser, im Werbesektor, Überdachungen, Außenverkleidungen, Abdeckungen von Materialien und somit zum Schutz von metallischen Oberflächen wie Stahlblechen, Anwendungen im Bausektor und Lichtwerbeprofile.

Die Deckschicht C zeichnet sich durch eine charakteristische matte, entspiegelnd wirkende Oberfläche aus, wodurch sie für die genannten Anwendungen besonders attraktiv wird.

Die nachstehende Tabelle (Tabelle 1) faßt die wichtigsten Eigenschaften der Folie gemäß der Erfindung zusammen.

**Tabelle 1**

| | Bereich gemäß der Erfindung | bevorzugt | besonders bevorzugt | Einheit | Messmethode |
|---|---|---|---|---|---|
| **Deckschicht A** | | | | | |
| Siegelanspringtemperatur | < 110 | < 105 | < 100 | °C | intern |
| Siegelnahtfestigkeit | > 1,3 | > 1,5 | > 1,8 | N/15 mm | intern |
| Mittlere Rauhigkeit $R_a$ | < 30 | < 25 | < 20 | nm | DIN 4768, Cut-off von 0,25 mm |
| Messwertbereich für die Gasströmung | 500-4000 | 800-3500 | 1000-3000 | sec | intern |
| Glanz, 20 ° | > 120 | > 130 | > 140 | | DIN 67 530 |
| **Deckschicht C** | | | | | |
| COF | < 0,5 | < 0,45 | < 0,40 | | DIN 53 375 |
| Mittlere Rauhigkeit $R_a$ | 200-1000 | 225-900 | 250-800 | nm | DIN 4768, Cut-off von 0,25 mm |
| Messwertbereich für die Gasströmung | < 50 | < 45 | < 49 | sec | intern |
| Glanz, 60 ° | < 60 | < 55 | < 50 | | DIN 67 530 |
| **weitere Folieneigenschaften** | | | | | |
| Trübung | < 40 | < 35 | < 30 | % | ASTM-D 1003-52 |
| Planare Orientierung | < 0,1650 | < 0,163 | < 0,160 | | intern |
| Bewitterungsprüfung, UV-Stabilität | < 20 % | | | | ISO 4892 |
| Eigenschaftsänderung [i] | | | | | |

Die Folien wurden nach der Testspezifikation ISO 4892 beidseitig je 1000 Stunden pro Seite mit dem Atlas CI 65 Weather Ometer der Fa. Atlas bewittert und anschließend bezüglich der mechanischen Eigenschaften, der Verfärbung, der Oberflächendefekte, der Trübung und des Glanzes geprüft.

In den nachfolgenden Ausführungsbeispielen erfolgt die Messung der einzelnen Eigenschaften gemäß der folgenden Normen bzw. Verfahren.

**Meßmethoden**

**SV (DCE), IV (DVE)**

Die Standardviskosität SV (DCE) wird, angelehnt an DIN 53726, in Dichloressigsäure gemessen. Die intrinsische Viskosität (IV) berechnet sich wie folgt aus der Standardviskosität

$$\text{IV (DCE)} = 6{,}67 \cdot 10^{-4}\,\text{SV} \cdot \text{(DCE)} + 0{,}118$$

**Bestimmung der Siegelanspringtemperatur (Mindestsiegelternperatur)**

Mit dem Siegelgerät HSG/ET der Firma Brugger werden heißgesiegelte Proben (Siegelnaht 20 mm x 100 mm) hergestellt, wobei die Folie bei unterschiedlichen Temperaturen mit Hilfe zweier beheizter Siegelbacken bei einem Siegeldruck von 2 bar und einer Siegeldauer von 0,5 s gesiegelt wird. Aus den gesiegelten Proben wurden Prüfstreifen von 15 mm Breite geschnitten. Die T-Siegelnahtfestigkeit wurde wie bei der Bestimmung der Siegelnahtfestigkeit gemessen. Die Siegelanspringtemperatur ist die Temperatur, bei der eine Siegelnahtfestigkeit von mindestens 0,5 N/15 mm erreicht wird.

**Siegelnahtfestigkeit**

Zur Bestimmung der Siegelnahtfestigkeit wurden zwei 15 mm breite Folienstreifen übereinandergelegt und bei 130 °C, einer Siegelzeit von 0,5 s und einem Siegeldruck von 2 bar (Gerät: Brugger Typ NDS, einseitig beheizte Siegelbacke) versiegelt. Die Siegelnahtfestigkeit wurde nach der T-Peel-Methode bestimmt.

**Reibung**

Die Reibung wurde nach DIN 53 375 bestimmt. Die Gleitreibungszahl wurde 14 Tage nach der Produktion gemessen.

**Oberflächenspannung**

Die Oberflächenspannung wurde mittels der sogenannten Tintenmethode (DiN 53 364) bestimmt.

**Trübung**

Die Trübung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

**Oberflächengasströmungszeit**

Das Prinzip des Messverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand dient.
Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit in Sekunden, die die Luft benötigt, um in dem Rezeptienten einen Druckanstieg von 56 mbar zu bewirken.

| Messbedingungen | |
|---|---|
| Messfläche | 45,1 cm$^2$ |
| Anpressgewicht | 1276 g |
| Lufttemperatur | 23 °C |
| Luftfeuchte | 50 % relative Feuchte |
| Gassammelvolumen | 1,2 cm$^3$ |
| Druckintervall | 56 mbar |

**Bestimmung der planaren Orientierung $\Delta$p**

Die Bestimmung der planaren Orientierung erfolgt über die Messung der Brechungsindizes mit dem Abbe-Refraktometer nach der internen Betriebsvorschrift 24.

| Probenvorbereitung | |
|---|---|
| Probengröße und Probenlänge | 60 bis 100 mm |
| Probenbreite | entspricht Prismenbreite von 10 mm |

Zur Bestimmung von $n_{MD}$ und $n_a$ (=$n_z$) muß die zu messende Probe aus der Folie ausgeschnitten werden, bei der die Laufkante der Probe exakt mit der TD-Richtung übereinstimmen muß. Zur Bestimmung von $n_{TD}$ und $n_a$ (=$n_z$) muß die zu messende Probe aus der Folie ausgeschnitten werden, bei der die Laufkante der Probe exakt mit der MD-Richtung übereinstimmen muß. Die Proben sind aus der Mitte der Folienbahn zu entnehmen. Es ist dafür Sorge zu tragen, daß das Abbe-Refraktometer eine Temperatur von 23 °C hat. Auf das vor der Messung gut gesäuberte untere Prisma wird mit Hilfe eines Glasstabes ein wenig Dijodmethan (N=1,745) bzw. Dijodmethan-Bromnaphthalin-Gemisch aufgetragen. Der Brechungsindex des Gemisches muß größer als 1,685 sein. Darauf wird zuerst die in TD-Richtung ausgeschnittene Probe aufgelegt, so daß die gesamte Prismenoberfläche bedeckt ist. Mit Hilfe eines Papiertaschentuches wird nun die Folie fest auf das Prisma aufgebügelt, so daß die Folie fest und glatt aufliegt. Die überflüssige Flüssigkeit muß abgesaugt werden. Danach wird ein wenig von der Meßflüssigkeit auf die Folie getropft. Das zweite Prisma wird heruntergeklappt und fest angedrückt. Nun wird mit Hilfe der rechten Rändelschraube die Anzeigeskala soweit gedreht, bis im Bereich 1,62 bis 1,68 ein Übergang von hell auf dunkel im Sichtfenster zu sehen ist. Ist der Übergang von hell auf dunkel nicht scharf, werden mit Hilfe der oberen Rändelschraube die Farben so zusammengeführt, daß nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Meßskala angezeigte Wert wird abgelesen und in das Meßprotokoll eingetragen. Dies ist der Brechungsindex in Maschinenrichtung $n_{MD}$. Nun wird die Skala mit der unteren Rändelschraube soweit verdreht, daß der im Okular sichtbare Bereich zwischen 1,49 und 1,50 zu sehen ist.

Jetzt wird der Brechungsindex in $n_a$ bzw. $n_z$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so daß ein scharfer Übergang zu sehen ist. Diese scharfe Übergangslinie wird mit Hilfe der unteren Rändelschraube in den Kreuzungspunkt der beiden diagonalen Linien gebracht und den auf der Skala angezeigten Wert abgelesen und in die Tabelle eingetragen.

Anschließend wird die Probe gedreht und die entsprechenden Brechungsindizes $n_{MD}$ und $n_a$ (=$n_z$) der anderen Oberflächenseite gemessen und in eine entsprechende Tabelle eingetragen.

Nach der Bestimmung der Brechungsindizes in MD-Richtung bzw. in Dickenrichtung wird der in MD-Richtung herausgeschnittene Probenstreifen aufgelegt und entsprechend die Brechungsindizes $n_{TD}$ und $n_a$ (= $n_z$) bestimmt. Der Streifen wird umgedreht und die Werte für die B-Seite gemessen. Die Werte für die A-Seite und die B-Seite werden zu mittleren Brechungswerten zusammengefasst. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

**Oberflächendefekte**

Die Oberflächendefekte werden visuell bestimmt.

**Mechanische Eigenschaften**

Der E-Modul, die Reißfestigkeit und die Reißdehnung werden in Längs- und Querrichtung nach ISO 527-1-2 gemessen.

**Bewitterung (beidseitig), UV-Stabilität**

Die UV-Stabilität wird nach der Testspezifikation ISO 4892 wie folgt geprüft

| | |
|---|---|
| Testgerät | Atlas Ci 65 Weather Ometer |
| Testbedingungen | ISO 4892, d. h. künstliche Bewitterung |
| Bestrahlungszeit | 1000 Stunden (pro Seite) |
| Bestrahlung | 0,5 W/m$^2$, 340 nm |
| Temperatur | 63 °C |
| Relative Luftfeuchte | 50 % |
| Xenonlampe | innerer und äußerer Filter aus Borosilikat |
| Bestrahlungszyklen | 102 Minuten UV-Licht, dann 18 Minuten UV-Licht mit Wasserbesprühung der Proben dann wieder 102 Minuten UV-Licht usw. |

**Farbveränderung**

Die Farbveränderung der Proben nach der künstlichen Bewitterung wird mit einem Spektralphotometer nach DIN 5033 gemessen.

Je größer die numerische Abweichung vom Standard ist, desto größer ist der Farbunterschied. Numerische Werte von 0,3 sind vernachlässigbar und bedeuten, daß keine signifikante Farbänderung vorliegt.

**Gelbwert**

Der Gelbwert (YID) ist die Abweichung von der Farblosigkeit in Richtung "Gelb" und wird gemäß DIN 6167 gemessen. Gelbwerte (YID) von < 5 sind visuell nicht sichtbar.

**Beispiele**

Bei nachstehenden Beispielen und den Vergleichsbeispielen handelt es sich jeweils um Folien unterschiedlicher Dicke, die nach einem bekannten Extrusionsverfahren hergestellt werden.

**Beispiel 1**

Chips aus Polyethylenterephthalat (hergestellt über das Umesterungsverfahren mit Mn als Umesterungskatalysator, Mn-Konzentration: 100 ppm) wurden bei 150 °C auf eine Restfeuchte von unterhalb 100 ppm getrocknet und dem Extruder für die Basisschicht B zugeführt. Ebenfalls wurden Chips aus Polyethylenterephthalat und einem Füllstoff dem Extruder für die nicht siegelfähige Deckschicht C zugeführt.

Daneben wurden Chips aus einem linearen Polyester hergestellt, der aus einem amorphen Copolyester mit 78 Mol.-% Ethylenterephthalat und 22 Mol-%. Ethylenisophthalat besteht (hergestellt über das Umesterungsverfahren mit Mn als Umesterungskatalysator, Mn-Konzentration: 100 ppm). Der Copolyester wurde bei einer Temperatur von 100 °C auf eine Restfeuchte von unterhalb 200 ppm getrocknet und dem Extruder für die siegelfähige Deckschicht A zugeführt.

Der UV-Stabilisator 2-(4,6-Diphenyl-1,3,5-triazin-2-yl)-5-(hexyl)-oxyphenol (®Tinuvin 1577) wird in Form von Masterbatchen zudosiert. Die Masterbatche setzten sich aus 5 Gew.-% Tinuvin 1577 als Wirkstoffkomponente und 95 Gew.-% Polyethylenterephthalat (für die Deckschicht C), bzw. 95 Gew.-% Polyethylenisophthalat (für die Deckschicht A) zusammen. Das 5 Gew.-%ige Tinuvin 1577 wird lediglich den beiden dicken Deckschichten 20 Gew.-% der jeweiligen Masterbatche über die Masterbatch-Technologie zudosiert werden.

Es wurde durch Koextrusion und anschließende stufenweise Orientierung in Längsund Querrichtung eine transparente dreischichtige Folie mit ABC-Aufbau und einer Gesamtdicke von 12 μm hergestellt. Die Dicke der jeweiligen Deckschichten ist der Tabelle 2 zu entnehmen.

| Deckschicht A, Mischung aus: | |
| --- | --- |
| 20,0 Gew.-% | UV-Masterbatch auf Basis von Polyethylenisophthalat |
| 77,0 Gew.-% | Copolyester mit einem SV-Wert von 800 |
| 3,0 Gew.-% | Masterbatch aus 97,75 Gew.-% Copolyester (SV-Wert von 800) und 1,0 Gew.-% ®Sylobloc 44 H (synthetisches $SiO_2$ der Fa. Grace) und 1,25 Gew.-% ®Aerosil TT 600 (pyrogenes $SiO_2$ der Fa. Degussa) |

| Basisschicht B: | |
| --- | --- |
| 100,0 Gew.-% | Polyethylenterephthalat mit einem SV-Wert von 800 |

| Deckschicht C, Mischung aus: | |
| --- | --- |
| 20,0 Gew.-% | UV-Masterbatch auf Basis Polyethylenterephthalat |
| 65,0 Gew.-% | Polyethylenterephthalat mit einem SV-Wert von 800 (=Komponente I) |
| 15,0 Gew.-% | Komponente II |

Die Komponente II wurde, wie in Beispiel 1 der **EP-A-0 144 878** näher beschrieben, hergestellt.

Die Herstellungsbedingungen in den einzelnen Verfahrensschritten waren:

| | | | |
| --- | --- | --- | --- |
| Extrusion | Temperaturen | A-Schicht | 270 °C |
| | | B-Schicht | 290 °C |
| | | C-Schicht | 290 °C |
| | Düsenspaltweite | | 2,5 mm |
| | Temperatur der Abzugswalze | | 30 °C |
| Längsstreckung | Temperatur | | 80 - 125°C |
| | Längsstreckverhältnis | | 4,2 |
| Querstreckung | Temperatur | | 80 - 135 °C |
| | Querstreckverhältnis | | 4,0 |
| Fixierung | Temperatur | | 230 °C |
| Dauer | | | 3 s |

Die Folie hatte die geforderten guten Siegeleigenschaften, die gewünschte Mattheit und zeigt das gewünschte Handling und das gewünschte Verarbeitungsverhalten. Der Folienaufbau und die erzielten Eigenschaften derart hergestellter Folien sind in den Tabellen 2 und 3 dargestellt.

Die Folie in diesem und in allen nachfolgenden Beispielen wurden nach der Testspezifikation ISO 4892 beidseitig je 1000 Stunden pro Seite mit dem Atlas Ci 65 Weather Ometer der Fa. Atlas bewittert und anschließend bezüglich der mechanischen Eigenschaften, der Verfärbung, der Oberflächendefekte, der Trübung und des Glanzes geprüft.

**Beispiel 2**

Im Vergleich zu Beispiel 1 wurde die Deckschichtdicke der siegelfähigen Schicht A von 1,5 auf 2,0 µm angehoben. Die Siegeleigenschaften haben sich hierdurch verbessert, insbesondere ist die Siegelnahtfestigkeit deutlich größer geworden.

**Beispiel 3**

Im Vergleich zu Beispiel 1 wurde jetzt eine 20 µm dicke Folie produziert. Die Deckschichtdicke der siegelfähigen Schicht A betrug 2,5 µm und diejenige der nicht siegelfähigen Schicht C betrug 2,0 µm. Die Siegeleigenschaften haben sich hierdurch nochmals verbessert, insbesondere ist die Siegelnahtfestigkeit deutlich größer geworden. Das Handling der Folie hat sich dabei tendenziell verbessert.

**Beispiel 4**

Im Vergleich zu Beispiel 3 wurde das Copolymere für die siegelfähige Deckschicht A geändert. Anstelle des amorphen Copolyesters mit 78 Mol.-% Polyethylenterephthalat und 22 Mol-% Ethylenterephthalat wurde jetzt ein amorpher Copolyester mit 70 Mol.-% Polyethylenterephthalat und 30 Mol-% Ethylenterephthalat verwendet. Der Rohstoff wurde auf einem Zweischneckenextruder mit Entgasung verarbeitet, ohne daß er vorgetrocknet werden musste. Die Deckschichtdicke der siegelfähigen Schicht A betrug wiederum 2,5 µm und diejenige der nicht siegelfähigen Schicht C betrug 2,0 µm. Die Siegeleigenschaften haben sich hierdurch verbessert, insbesondere ist die Siegelnahtfestigkeit deutlich größer geworden. Zur Erzielung eines guten Handlings und eines guten Verarbeitungsverhalten der Folie wurde die Pigmentkonzentration in den beiden Deckschichten leicht angehoben.

**Vergleichsbeispiel 1**

Im Vergleich zu Beispiel 1 wurde jetzt die siegelfähige Deckschicht A nicht pigmentiert. Die Siegeleigenschaften haben sich zwar hierdurch etwas verbessert, jedoch ist das Handling der Folie und das Verarbeitungsverhalten inakzeptabel schlechter geworden.

**Vergleichsbeispiel 2**

Im Vergleich zu Beispiel 1 wurde jetzt die siegelfähige Deckschicht A so hoch pigmentiert wie die nicht siegelfähige Deckschicht C. Das Handling und die Verarbeitungseigenschaften der Folie haben sich durch diese Maßnahme verbessert, jedoch sind die Siegeleigenschaften deutlich schlechter geworden.

**Vergleichsbeispiel 3**

Im Vergleich zu Beispiel 1 wurde jetzt die nicht siegelfähige Deckschicht A deutlich weniger pigmentiert. Das Handling der Folie und das Verarbeitungsverhalten der Folie ist deutlich schlechter geworden.

**Vergleichsbeispiel 4**

Es wurde Beispiel 1 aus der **EP-A-0 035 835** nachgearbeitet. Das Siegelverhalten der Folie, das Handling der Folie und das Verarbeitungsverhalten der Folie ist schlechter als bei den Beispielen gemäß der Erfindung.

**Tabelle 2**

| Bei-spiel | Folien-dicke μm | Folien-aufbau | Schichtdicken μm | | | Pigmente in den Schichten | | | mittlerer Pigment-Durchmesser in Schichten μm | | | Pigment-konzentrationen ppm | | |
|---|---|---|---|---|---|---|---|---|---|---|---|---|---|---|
| | | | A | B | C | A | B | C | A | B | C | A | B | C |
| B 1 | 12 | ABC | 1,5 | 9 | 1,5 | Sylobloc 44 H / Aerosil TT 600 | kein | 0 | 2,5 / 0,04 | | 2,5 / 0,04 | 300 / 375 | 0 | 0 |
| B 2 | 12 | ABC | 2,0 | 8,5 | 1,5 | Sylobloc 44 H / Aerosil TT 600 | kein | 0 | 2,5 / 0,04 | | 2,5 / 0,04 | 300 / 375 | 0 | 0 |
| B 3 | 20 | ABC | 2,5 | 15,5 | 2,0 | Sylobloc 44 H / Aerosil TT 600 | kein | 0 | 2,5 / 0,04 | | 2,5 / 0,04 | 300 / 375 | 0 | 0 |
| B 4 | 20 | ABC | 2,5 | 15,5 | 2,0 | Sylobloc 44 H / Aerosil TT 600 | kein | 0 | 2,5 / 0,04 | | 2,5 / 0,04 | 400 / 500 | 0 | 0 |
| VB 1 | 12 | ABC | 1,5 | 9 | 1,5 | kein | kein | Sylobloc 44 H / Aerosil TT 600 | | | 2,5 / 0,04 | | 0 | 1200 / 1500 |
| VB 2 | 12 | ABC | 1,5 | 9 | 1,5 | Sylobloc 44 H / Aerosil TT 600 | kein | Sylobloc 44 H / Aerosil TT 600 | 2,5 / 0,04 | | 2,5 / 0,04 | 300 / 375 | 0 | 1200 / 1500 |
| VB 3 | 12 | ABC | 1,5 | 9 | 1,5 | Sylobloc 44 H / Aerosil TT 600 | kein | Sylobloc 44 H / Aerosil TT 600 | 2,5 / 0,04 | | 2,5 / 0,04 | 300 / 375 | 0 | 600 / 750 |
| VB 4 | 15 | AB | 2,25 | 12,75 | | Gasil 35 / EP-A 035 835 | kein | | 3 | | | 2500 | 0 | |

## Tabelle 3

| Bei-spiel | Siegel-anspring-temperatur A-Seite gegen A-Seite | Siegel-naht-festigkeit A-Seite gegen A-Seite | Reibung COF C-Seite gegen C-Seite | Mittlere Rauhigkeit $R_a$ A-Seite | C-Seite | Messwerte für die Gasströmung A-Seite | C-Seite | Δp | Glanz A-Seite | C-Seite | Trü-bung | Wickel-verhalten und Handling | Verar-beitungs-verhalten |
|---|---|---|---|---|---|---|---|---|---|---|---|---|---|
| B 1 | 100 | 2,0 | 0,45 | 25 | 340 | 1200 | 20 | 0,165 | 140 | 50 | 32 | ++ | ++ |
| B 2 | 98 | 2,7 | 0,45 | 26 | 340 | 1280 | 20 | 0,165 | 140 | 50 | 32 | ++ | ++ |
| B 3 | 95 | 3,0 | 0,41 | 23 | 340 | 1110 | 20 | 0,165 | 130 | 45 | 34 | ++ | ++ |
| B 4 | 85 | 3,3 | 0,40 | 23 | 340 | 1300 | 20 | 0,165 | 130 | 45 | 34 | ++ | ++ |
| VB 1 | 98 | 2,1 | 0,45 | 10 | 65 | 10000 | 80 | 0,165 | 160 | 170 | 1,5 | - | - |
| VB 2 | 110 | 1,0 | 0,45 | 65 | 65 | 80 | 80 | 0,165 | 130 | 170 | 2,8 | - | - |
| VB 3 | 100 | 2,0 | 0,45 | 25 | 37 | 1200 | 150 | 0,165 | 160 | 190 | 1,5 | - | - |
| VB 4 | 115 | 0,97 | >2 | 70 | 20 | 50 | >5000 | | | | 12 | - | - |

Zeichenerklärung beim Wickelverhalten, Handling und beim Verarbeitungsverhalten der Folien:

++: keine Klebeneigung an Walzen oder anderen mechanischen Teilen, keine Blockprobleme beim Wickeln und bei der Verarbeitung auf Verpackungsmaschinen, niedrige Herstellkosten

-: Klebeneigung an Walzen oder anderen mechanischen Teilen, Blockprobleme beim Wickeln und bei der Verarbeitung auf Verpackungsmaschinen, hohe Herstellkosten durch aufwendiges Handling der Folie in den Maschinen

EP 1 274 579 B1

Tabelle 4

| Beispiel | Bewitterung | E-Modul N/mm² | | Reißfestigkeit N/mm² | | Reißdehnung % | | Gesamt-verfärbung ΔE | Oberflächen-defekte | Glanz | | Trübung |
|---|---|---|---|---|---|---|---|---|---|---|---|---|
| | | längs | quer | längs | quer | längs | quer | | | A-Seite | C-Seite | |
| 1 | Vorher | 4300 | 5800 | 220 | 280 | 170 | 100 | | | 140 | 170 | 2,5 |
| | Nachher | 4100 | 5480 | 190 | 270 | 150 | 90 | 0,2 | keine | 132 | 165 | 2,8 |
| 2 | Vorher | 4200 | 5600 | 215 | 260 | 170 | 100 | | | 140 | 170 | 2,5 |
| | Nachher | 4030 | 5400 | 190 | 250 | 150 | 90 | 0,25 | keine | 138 | 165 | 2,8 |
| 3 | Vorher | 4500 | 5700 | 230 | 280 | 175 | 105 | | | 130 | 170 | 3,0 |
| | Nachher | 4000 | 5350 | 196 | 255 | 150 | 89 | 0,24 | keine | 138 | 155 | 3,7 |
| 4 | Vorher | 4300 | 5800 | 220 | 275 | 178 | 111 | | | 130 | 170 | 3,0 |
| | Nachher | 3900 | 5360 | 192 | 248 | 148 | 92 | 0,27 | keine | 138 | 165 | 3,5 |

## Patentansprüche

1. Einseitig matte, siegelfähige, UV-stabilisierte, koextrudierte, biaxial orientierte Polyesterfolie mit mindestens einer Basisschicht B auf Basis eines thermoplastischen Polyesters, einer siegelfähigen Deckschicht A und einer weiteren matten Deckschicht C, wobei in mindestens einer Schicht ein UV-Absorber enthalten ist, **dadurch gekennzeichnet, daß** die siegelfähige Deckschicht A eine Siegelanspringtemperatur von 110 °C und eine Siegelnahtfestigkeit von mindestens 1,3 N/15 mm aufweist und die Topographien der beiden Deckschichten A und C folgende Merkmale besitzen

Siegelfähige Deckschicht A:

- $R_a$-Wert< 30 nm
- Messwert der Gasströmung 500 - 4000 s

Nicht siegelfähige, matte Deckschicht C:

- 200 nm < $R_a$ < 1000 nm
- Messwert der Gasströmung < 50 s

**2.** Folie nach Anspruch 1, **dadurch gekennzeichnet, daß** die siegelfähige Deckschicht A einen amorphen Copolyester enthält, der aus Ethylenterephthalat- und Ethylenisophthalat-Einheiten und aus Ethylenglykol-Einheiten aufgebaut ist.

**3.** Folie nach Anspruch 1 oder 2, **dadurch gekennzeichnet, daß** der amorphe Copolyester der siegelfähigen Deckschicht A Ethylenterephthalat in einem Anteil von 40 bis 95 Mol-% und Ethylenisophthalat in einem Anteil von 60 bis 5 Mol-%, bevorzugt Ethylenterephthalat in einem Anteil von 50 bis 90 Mol-% und Ethylenisophthalat in einem Anteil von 50 bis 10 Mol-% und insbesondere Ethylenterephthalat in einem Anteil von 60 bis 85 Mol-% und Ethylenisophthalat in einem Anteil von 40 bis 15 Mol-% enthält.

**4.** Folie nach einem oder mehreren der Ansprüche 1 bis 3, **dadurch gekennzeichnet, daß** die matte Deckschicht C ein Blend oder eine Mischung aus zwei Komponenten I und II und gegebenenfalls Additive in Form von inerten anorganischen Antiblockmitteln enthält.

**5.** Folie nach einem oder mehreren der Ansprüche 1 bis 4, **dadurch gekennzeichnet, daß** die Konzentration des UV-Absorbers im Bereich von 0,01 Gew.-% bis 5,0 Gew.-% vorzugsweise 0,1 Gew.-% bis 3 Gew.-%, bezogen auf das Gewicht der jeweiligen Schicht des verwendeten Polyesters , liegt.

**6.** Folie nach einem oder mehreren der Ansprüche 1 bis 5, **dadurch gekennzeichnet, daß** sie als UV-Absorber 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und/ oder Triazine, vorzugsweise 2-Hydroxybenzotriazole und Triazine und insbesondere 2-(4,6-Diphenyl-1,3,5-triazin-2-yl)-5-(hexyl)oxy-phenol oder 2,2'-Methylen-bis(6-(2Hbenzotriazol-2-yl)-4-(1,1,2,2-tetramethylpropyl, tetramethylbutyl)-phenol enthält.

**7.** Folie nach einem oder mehreren der Ansprüche 1 bis 6, **dadurch gekennzeichnet, daß** Regenerat in einer Konzentration bis zu 60 Gew.-%, bezogen auf das Gesamtgewicht der Folie, enthalten ist.

**8.** Verfahren zur Herstellung einer einseitig matten, siegelfähigen, UV-stabilisierten, biaxial orientierten Polyesterfolie nach Anspruch 1 mit mindestens einer Polyesterfolie mit mindestens einer Basisschicht B auf Basis eines thermoplastischen Polyesters, einer siegelfähigen Deckschicht A und einer weiteren matten Deckschicht C, wobei in mindestens einer Schicht ein UV-Absorber enthalten ist, **dadurch gekennzeichnet, daß** die den einzelnen Schichten der Folie entsprechenden Schmelzen durch eine Flachdüse koextrudiert werden, die so erhaltene Folie zur Verfestigung auf einer oder mehreren Walze/n abgezogen wird, die Folie anschließend biaxial gestreckt (orientiert) und die biaxial gestreckte Folie thermofixiert wird.

**9.** Verfahren nach Anspruch 8, **dadurch gekennzeichnet, daß** die Folie an der zur Behandlung vorgesehenen Oberflächenschicht corona- oder flammbehandelt wird.

**10.** Verfahren nach Anspruch 8 oder 9, **dadurch gekennzeichnet, daß** der UV-Absorber beim Thermoplast-Rohstoffhersteller oder bei der Folienherstellung in den Extruder zudosiert wird, wobei die Zugabe über die Masterbatch-Technologie bevorzugt ist.

**11.** Verfahren nach Anspruch 10, **dadurch gekennzeichnet, daß** das Materbatch neben dem Thermoplast 2,0 bis 50,0 Gew.-%, vorzugsweise 5,0 bis 30,0 Gew.-% UV- Absorber enthält, wobei die Summe der Bestandteile stets 100 Gew.-% beträgt.

**12.** Verwendung der Folie nach einem oder mehreren der Ansprüche 1 bis 7 für die Anwendung im Innen- und Außenbereich.

**13.** Verwendung nach Anspruch 12 im Innenbereich für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium und im Außenbereich für Gewächshäuser, im Werbesektor, Überdachungen, Außenverkleidungen, Abdeckungen von Materialien, Anwendungen im Bausektor und Lichtwerbeprofile.

**Claims**

**1.** A sealable, UV-resistant, coextruded, biaxially oriented polyester film with one matt side and with at least one base layer B based on a thermoplastic polyester, and with a sealable outer layer A, and with another matt, outer layer C, where at least one layer comprises a UV absorber; wherein the sealable outer layer A has a minimum sealing temperature of 110°C and a seal seam strength of at least 1.3 N/15 mm, and the topographies of the two outer layers A and C have the following features

   sealable outer layer A:

   - $R_a < 3\ 0$ nm
   - value measured for gas flow 500 to 4000 s

   nonsealable, matt outer layer C:

   - 200 nm $< R_a < 1000$ nm
   - value measured for gas flow < 50 s.

**2.** The film as claimed in claim 1, wherein the sealable outer layer A comprises an amorphous copolyester which has been built up from ethylene terephthalate units and ethylene isophthalate units and from ethylene glycol units.

**3.** The film as claimed in claim 1 or 2, wherein the amorphous copolyester of the sealable outer.layer A contains from 40 to 95 mol% of ethylene terephthalate and from 60 to 5 mol% of ethylene isophthalate, preferably from 50 to 90 mol% of ethylene terephthalate and from 50 to 10 mol% of ethylene isophthalate, and in particular from 60 to 85 mol% of ethylene terephthalate and from 40 to 15 mol% of ethylene isophthalate.

**4.** The film as claimed in one or more of claims 1 to 3, wherein the matt outer layer C comprises a blend or a mixture made from two components I and II and, if desired, comprises additives in the form of inert inorganic antiblocking agents.

**5.** The film as claimed in one or more of claims 1 to 4, wherein the concentration of the UV absorber is from 0.01 to 5.0% by weight, preferably from 0.1 to 3% by weight, based on the weight of the respective layer of the polyester used.

**6.** The film as claimed in one or more of claims 1 to 5, wherein the UV absorbers present are 2-hydroxybenzophenones, 2-hydroxybenzotriazoles, organonickel compounds, salicylic esters, cinnamic ester derivatives, resorcinol monobenzoates, oxanilides, hydroxybenzoates, sterically hindered amines and/or triazines, preferably 2-hydroxybenzotriazoles and triazines and in particular 2-(4,6-diphenyl-1,3,5-triazin-2-yl)-5-hexyloxyphenol or 2,2'-methylenebis(6-(2H-benzotriazol-2-yl)-4-(1,1,2,2-tetramethylpropyl, -tetramethylbutyl)phenol.

**7.** The film as claimed in one or more of claims 1 to 6, wherein regrind is present at a concentration of up to 60% by weight, based on the total weight of the film.

**8.** A process for producing a sealable, UV-resistant, biaxially oriented polyester film with one matt side as claimed in claim 1, and with at least one polyester film, and with at least one base layer B based on a thermoplastic polyester, and with a sealable outer layer A, and with another matt outer layer C, where at least one layer comprises a UV absorber, wherein the melts corresponding to the individual layers of the film are coextruded through a flat-film die, the resultant film is drawn off for solidification on one or more rolls, the film is then biaxially stretched (oriented), and the biaxially stretched film is heat-set.

9. The process as claimed in claim 8, wherein the film is corona- or flame-treated on the surface layer intended for treatment.

10. The process as claimed in claim 8 or 9, wherein the UV absorber is fed into the extruder when the thermoplastic polymer is prepared, or during film production, and is preferably fed by way of masterbatch technology.

11. The process as claimed in claim 10, wherein the masterbatch comprises, besides the thermoplastic, from 2.0 to 50.0% by weight, preferably from 5.0 to 30.0% by weight, of UV absorber, the constituents always giving 100% by weight in total.

12. The use of the film as claimed in one or more of claims 1 to 7 for indoor or outdoor applications.

13. The use as claimed in claim 12 indoors for interior decoration, for constructing exhibition stands or for exhibition requisites, as displays, for placards, for protective glazing of machines or of vehicles, in the lighting sector, in the fitting out of shops or of stores, as a promotional requisite or laminating medium, or outdoors for greenhouses, in the advertising sector, roofing systems, exterior cladding, protective coverings for materials, or construction sector applications or illuminated advertising profiles.

**Revendications**

1. Feuille polyester orientée biaxialement, coextrudée, stabilisée vis à vis des U.V., scellable et mate sur une face, ayant au moins une couche de base B à base d'un polyester thermoplastique, une couche de recouvrement A scellable et une autre couche de recouvrement C mate, au moins une couche contenant un absorbeur U. V., **caractérisée en ce que** la couche de recouvrement A scellable présente une température d'amorçage du scellage de 110°C et une résistance du point de scellage d'au moins 1,3 N/15 mm et les topographies des deux couches de recouvrement A et C possèdent les caractéristiques suivantes :

   Couche de recouvrement A scellable :

   - Valeur $R_a$ < 30 nm
   - Valeur de mesure du courant gazeux 500 à 4000 s

   Couche de recouvrement C mate non scellable

   - 200 nm < $R_a$ < 1000 nm
   - Valeur de mesure du courant gazeux < 50 s

2. Feuille selon la revendication 1, **caractérisée en ce que** la couche de recouvrement A scellable contient un copolyester amorphe, qui est constitué d'unités d'éthylène téréphtalate et éthylène isophtalate et d'unités d'éthylène glycol.

3. Feuille selon la revendication 1 ou 2, **caractérisée en ce que** le copolyester amorphe de la couche de recouvrement A scellable contient de l'éthylène téréphtalate en une proportion allant de 40 à 95 % en moles et de l'éthylène isophtalate en une proportion allant de 60 à 5 % en moles, de préférence de l'éthylène téréphtalate en une proportion allant de 50 à 90 % en moles et de l'éthylène isophtalate en une proportion allant de 50 à 10 % en moles et en particulier de l'éthylène téréphtalate en une part allant de 60 à 85 % en moles et de l'éthylène isophtalate en une proportion allant de 40 à 15 % en moles.

4. Feuille selon l'une quelconque ou plusieurs des revendications 1 à 3, **caractérisée en ce que** la couche de recouvrement C mate contient un mélange ou un blend de deux composants I et II et éventuellement des additifs sous forme d'agents anti-bloquants inorganiques inertes.

5. Feuille selon l'une quelconque ou plusieurs des revendications 1 à 4, **caractérisée en ce que** la concentration en absorbeur d'U.V. se situe dans la plage allant de 0,01 % en poids à 5,0 % en poids, de préférence 0,1 % en poids à 3 % en poids, par rapport au poids de la couche respective du polyester utilisé.

6. Feuille selon l'une quelconque ou plusieurs des revendications 1 à 5, **caractérisée en ce qu'**elle contient comme absorbeur d'U.V. des 2-hydroxybenzophénones, des 2-hydroxybenzotriazoles, des composés organiques de nickel, des esters d'acide salicylique, des dérivés d'esters d'acide cinnamique, des monobenzoates de résorcine, des anilides d'acide oxalique, des esters d'acide hydroxybenzoïque, des amines ou des triazines encombrées stériquement, de préférence des 2-hydroxybenzotriazoles et des triazines et en particulier le 2-(4,6-diphényl-1,3,5-triazin-2-yl)-5-(hexyl)oxyphénol ou le 2,2'-méthylène-bis(6-(2H-benzotriazol-2-yl)-4-(1,1,2,2-tétraméthylpropyl,-tétraméthylbutyl)-phénol.

7. Feuille selon l'une quelconque ou plusieurs des revendications 1 à 6, **caractérisée en ce qu'**elle comprend un composé recyclé en une concentration allant jusqu'à 60 % en poids par rapport au poids total de la feuille.

8. Procédé de fabrication d'une feuille polyester orientée biaxialement, coextrudée, stabilisée vis à vis des U.V., scellable et mate d'un seul côté selon la revendication 1, composée d'au moins une feuille de polyester ayant au moins une couche de base B à base d'un polyester thermoplastique, une couche de recouvrement A scellable et une autre couche de recouvrement C mate, au moins une couche contenant un absorbeur d'U.V., **caractérisé en ce que** les matières fondues correspondant aux différentes couches de la feuille sont extrudées par le biais d'une buse plate, **en ce que** la feuille ainsi obtenue est passée sur un ou plusieurs rouleaux pour solidification, **en ce que** la feuille est ensuite étirée (orientée) biaxialement et **en ce que** la feuille étirée biaxialement est thermofixée.

9. Procédé selon la revendication 8, **caractérisée en ce que** la feuille subit un traitement à la flamme ou corona sur la couche de surface prévue pour le traitement.

10. Procédé selon la revendication 8 ou 9, **caractérisé en ce que** l'absorbeur d'U.V. est ajouté par le fabricant de la matière brute thermoplastique ou, dans l'extrudeuse lors de la fabrication des feuilles, l'addition par le biais de la technologie des mélanges-maîtres (Masterbatch) étant préférée.

11. Procédé selon la revendication 10, **caractérisé en ce que** le mélange-maître contient, hormis le thermoplastique, 2,0 à 50,0 % en poids, de préférence 5,0 à 30,0 % en poids d'absorbeur d'U.V., la somme des composants étant toujours égale à 100 % en poids.

12. Utilisation de la feuille selon l'une quelconque ou plusieurs des revendications 1 à 7 pour l'utilisation en intérieur et en extérieur.

13. Utilisation selon la revendication 12 en intérieur pour les habillages intérieur, pour l'installation des foires et les articles de foire, comme affichages, pour les panneaux, pour les verres protecteurs de machines et de véhicules, dans le secteur de l'éclairage, dans l'agencement des magasins et des étals, comme article publicitaire, produit de laminage et en extérieur pour les serres, dans le secteur de la publicité, les toitures, pour les habillages externes, pour les couvertures de matériaux, pour les applications dans le secteur du bâtiment et pour des profilés publicitaires lumineux.